# EUROPEAN PATENT SPECIFICATION

(11) **EP 2 759 161 B1**
(45) Date of publication and mention of the grant of the patent: **09.03.2016**
(21) Application number: 12833609.6
(22) Date of filing: 24.09.2012
(51) Int. Cl.: H04L 12/403

(54) **ENERGY MANAGEMENT SYSTEM**
ENERGIEVERWALTUNGSSYSTEM
SYSTÈME DE GESTION D'ÉNERGIE

(30) Priority: 24.09.2011 US 201161538806 P
(43) Date of publication of application: 30.07.2014
(73) Proprietor: Kool Koncepts Limited, Hong Kong (CN)
(72) Inventor: CHEN, Andrew Yuen Chin, Wan Chai Hong Kong (CN); CHENG, Amy Decem, Wan Chai Hong Kong (CN); TAM, Tsz Kai, Wan Chai Hong Kong (CN)
(74) Representative: Lecca, Patricia S.
(86) International application number: PCT/IB2012/055082
(87) International publication number: WO 2013/042100

(56) References cited:
- EP-A1- 1 471 661
- EP-A1- 2 254 280
- WO-A1-2009/067737
- CN-A- 1 313 542
- CN-A- 101 321 211
- CN-A- 101 459 300
- US-A1- 2010 118 887
- US-A1- 2011 116 075

## Description

### CROSS-REFERENCE TO RELATED APPLICATIONS

This application claims the benefit of priority of U.S. Serial No. 61/538,806, filed September 24, 2011.

### BACKGROUND OF THE INVENTION

The present invention relates generally to systems for the automation of monitoring and controlling electrical appliances to reduce energy consumption and increase energy efficiency for households, offices and institutions.

An energy management system can be a smart meter, a power measuring AC socket, a remote controlled AC socket, a smart power strip, a smart home system, or a campus wide energy management system through network control and monitoring. An example of an energy management system would be those described in US 2010118887 A1 which is directed to a communication system and a communication method adapted in use to share a signal path line with an existing time-division multiplexing transmission system.

A smart meter is a household electricity meter which also has a communication subsystem to provide usage, instant or monthly, to the utility facility for billing and supply planning purposes. It creates a dynamic two-way dialogue between utilities and their customers. This dialogue aims to drive energy efficiency and demand response. Examples available on the market are TENDRIL. The electricity power consumption is a cumulated total per household.

A power measuring AC socket is usually an add-on device, which is inserted between an ordinary AC socket and an appliance under measurement. The device measures the electricity power getting through from the ordinary AC socket to the appliance. The measurement results are usually shown on the display associated on the device. With these results, users can understand how much electricity a particular appliance consumes at any operation modes. Further usage plans can be decided by the users to facilitate energy saving. An example available in the market is Kill-A-Watt.

A remotely controlled AC socket is usually an add-on device, which is inserted between an ordinary AC socket and an appliance. The device usually contains a switch to turn on or off the mains power to the appliance. The device can be controlled remotely through various technologies, such as infra-red, radio frequency wave, power-line signal and so on. Some of the technologies, like modem, router, and the Internet, allow the extension of the control far away from the premises, where the device and the appliance are installed. With this device, the usage of the appliance can therefore be managed remotely to improve energy utilization. An example available in the market is Wayne Dalton.

A smart power strip is an extension of AC sockets, which are usually divided into two kinds, namely master and peripheral. Electric power consumption of the master socket is being monitored. When the appliance plugged into the master socket consumes power less than a threshold (standby power), those peripheral sockets will be switched off automatically to cut further power consumption. On the contrary, when the master socket draws power higher than the threshold (re-activated to normal), those peripheral sockets will be turned on automatically. For example, a computer is plugged into the master socket, while the associated monitor, printer, router, speaker are in the peripheral sockets. Examples available on the market are IntelliPanel and BuLogics.

A smart home system is usually a home wide network which complies of devices such as light switches, AC sockets, door locks, room temperature conditioning thermostat, remote controllers, and so on. Examples available in the market are HAI, EnergyHub and Energate. These devices communicate with each other to form a network, and the networking media can be radio frequency, infra-red, or power-line. These systems mainly address home control automation. Though some of the devices include the power measurement feature, there is usually no proactive energy saving schemes for users to save energy.

A campus wide energy management system utilizes network infrastructure to link up various sub-systems such as power measuring AC sockets and remotely controlled AC sockets, which are installed throughout the campus, which is usually divided into small areas of clusters to facilitate management and operations. A control centre will review the energy usage and control appliance individually or cluster-wise, in order to better utilize the energy consumption. Examples of this system are Cisco's Energy Wise and Agilewaves.

However, each of the above energy management devices has its weakness. For example, the smart meter reports a total electricity usage per household. There is no idea which individual appliance consumes more. This makes energy management difficult and inefficient. The power measuring AC socket tells how much an appliance consumes, but will not proactively help the users about energy saving. Similarly, the remotely controlled AC socket needs users' intervention to switch off so as to save energy. On the contrary, the smart power strip is actively helping users to save energy, as it measures the master appliance and switches off the peripherals automatically. The only drawback is that the master and its peripherals have to be plugged on the same smart strip. A campus wide energy management system is the most complete and automatic solution, but the implementation complexity, equipment cost, maintenance works will overwhelm the benefit of energy saved for a household user.

### SUMMARY OF THE INVENTION

The present invention provides a system, which measures the power consumption of each appliance plugged in the system, and is able to remotely switch on or off any appliance plugged in the system. In one embodiment, the software application can be configured to proactively and automatically manage one or many peripheral appliances to switch on or off based on the power consumption of one or many master appliances. These master and peripheral appliances are not necessary to be plugged on the same power strip. For example, a configuration can be set to have an Internet router (in living room) and a laser printer (in study room) automatically switched off when all computers (in study room and bedrooms) have been consuming standby power only.

The invention also provides appliance plugged and unplugged detection and notification to the users. Since all the appliances in the system will be monitored and controlled, the correct identification of each appliance is important. This detection and notification is to identify new appliance joining the system, to update the configuration if an appliance has been emigrated from one AC socket to another in the system.

Features are designed to provide minimal effort and less intervention required by the users to maintain effective and efficient energy saving.

In one embodiment, the Energy Management System of the present invention is a home- or office-wide network comprising a single Master Device, together with a plurality of Slave Devices. Each of the Slave Device is capable of remote controlling and energy measuring over multiple home or office appliances, such as TV, computers, game consoles, ovens, washing machines, lighting and so on. They communicate wirelessly with the Master Device, which then communicate wirelessly with computers and portable devices, such as smart phones or tablet PCs. The software, or apps, runs on computers or portable devices provides a user interface to manage the energy measurement data and control of those connected appliances. Through modems, routers, and the Internet service providers, the measurement and control can be accessed remotely, even when the user is not at the location where the appliances are located.

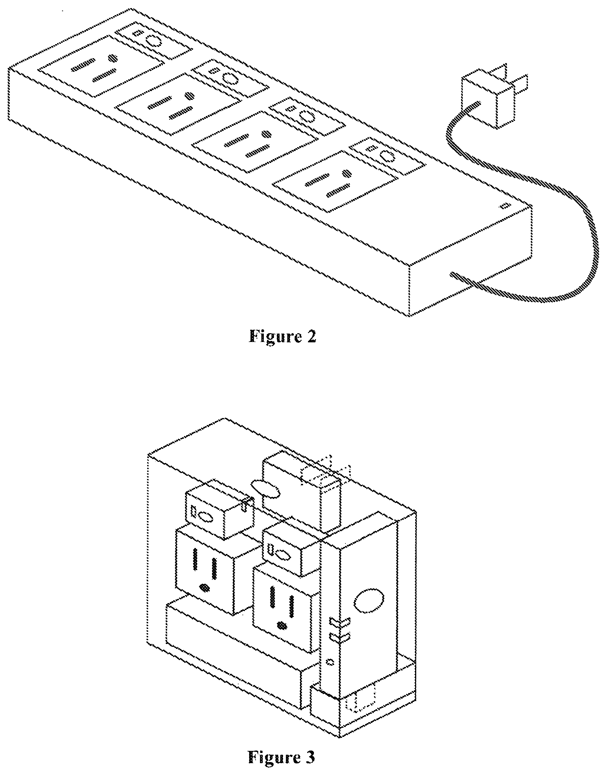

In one embodiment, the Slave Device functions as an ordinary power strip (*see* Figure 2). It also has the feature of a smart strip. The Slave Device does not classify its AC sockets into master nor peripheral. Since each of the AC sockets on the Slave Device is capable of both power measurement and remote controlling, either a master or peripheral appliance can be plugged into the AC socket depending on system configuration through the software application on computers, or apps on smart phones or tablet PC. Therefore, the invention extends the smart strip feature not limited to one Slave Device, it can be across multiple Slave Devices. That is the master appliance can be on one Slave Device, but the associated peripherals can be on any other Slave Devices wirelessly linked together.

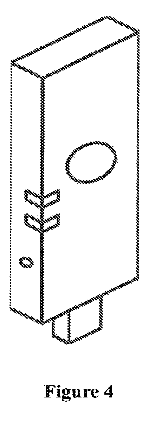

In one embodiment, the Master Device (*see* Figure 3) not only has the same functions as the Slave Device, but also includes a detachable Dongle. (*see* Figure 4), a docking space for the Dongle, and a battery charging circuitry for the Dongle. In one embodiment, the Dongle comprises an industrial standard Wi-Fi module which translates the power measurement data and remote control instructions to and from the Master or Slave Devices to be accepted by computers, smart phones and tablet PC which support the Wi-Fi feature, so that PC software and apps can be utilized to control the appliances and to analyze the data through a user friendly and interactive interface, instead of just a traditional button driven remote controller that is almost unable to upgrade with new features in the future. Currently, some home or office automation systems also have similar Wi-Fi translation to allow the use of Wi-Fi enabled computers, smart phones or tablet PC to take the control. However, they join the existing Wi-Fi network. The present invention, in contrast, is capable of creating a new Wi-Fi network if there is no existing Wi-Fi network. Alternatively, the system of the present invention would provide a Wi-Fi network that can cover some blind spots where the computers, smart phones or tablet PC are located. In one embodiment, the Dongle is rechargeable battery powered, so it is portable to minimize the chance of having Wi-Fi blind spots.

In another embodiment, in order to further improve user friendliness, every AC socket in the Master and Slave Devices will have a plug detection feature. Whenever an appliance has been plugged or unplugged, the user will be notified through the computer software or apps. Therefore, the user will have an immediate notification of unsecured plug insertion, or incorrect plug removal. This can protect major appliances to operate properly.

### BRIEF DESCRIPTION OF THE FIGURES

The accompanying drawings which are incorporated into and constitute a part of this specification illustrate one or more embodiments of the present invention and together with the detailed description serve to explain the principles and implementations of the invention.

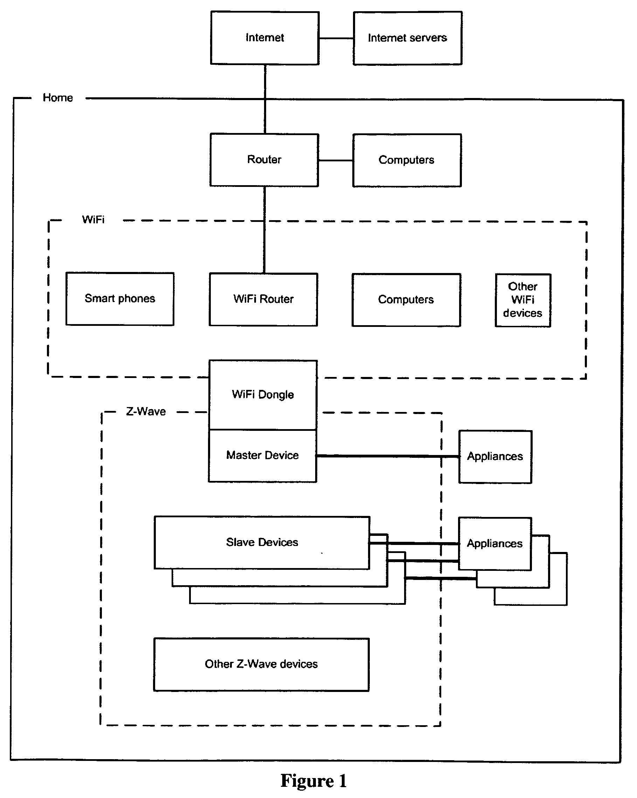

**Figure 1** shows a connectivity overview of one embodiment of the present Energy Management System.
**Figure 2** shows an illustration for one embodiment of a power measurement device, the Slave Device.
**Figure 3** shows an illustration for one embodiment of a power measurement device, the Master Device.
**Figure 4** shows an illustration for one embodiment of the Dongle.

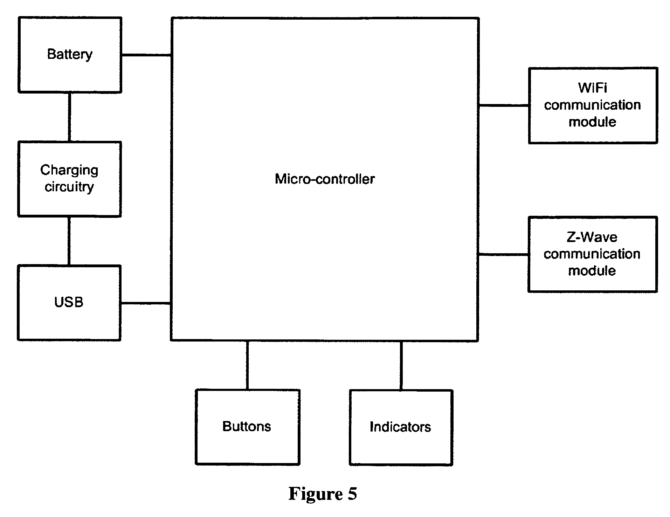

**Figure 5** shows a schematic diagram for one embodiment of the Dongle.

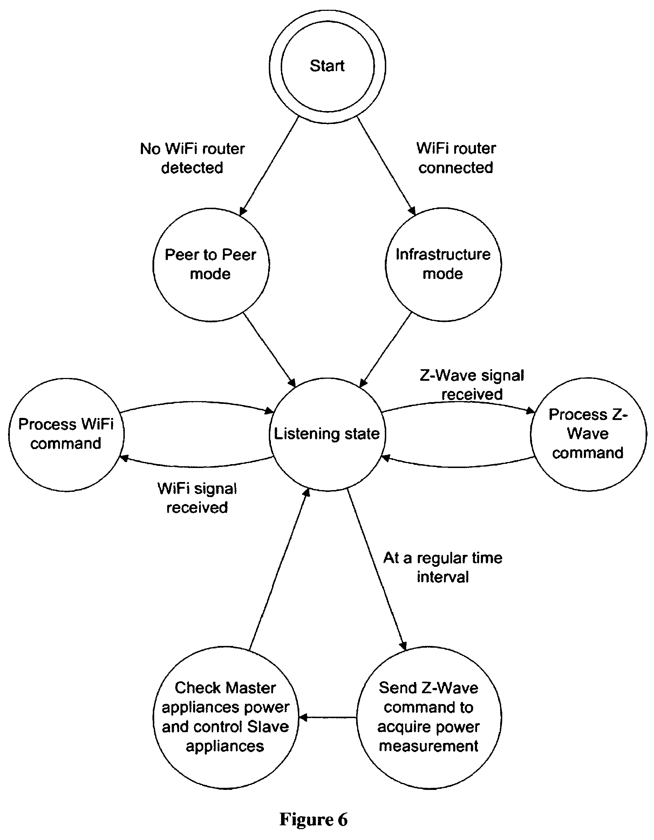

**Figure 6** shows one embodiment of the software state diagram for the Dongle.

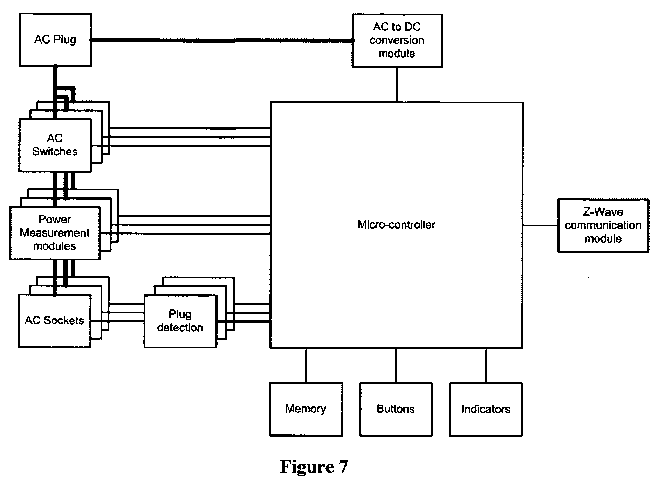

**Figure 7** shows a schematic diagram for one embodiment of the Master/Slave device.

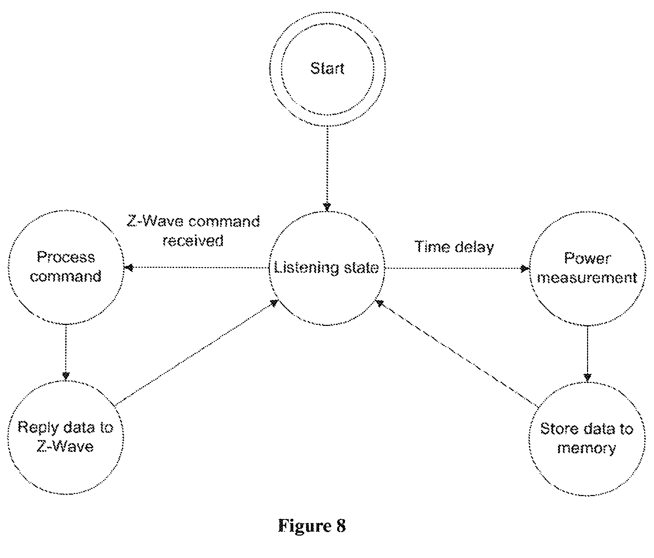

**Figure 8** shows one embodiment of the software state diagram for the Master/Slave device.

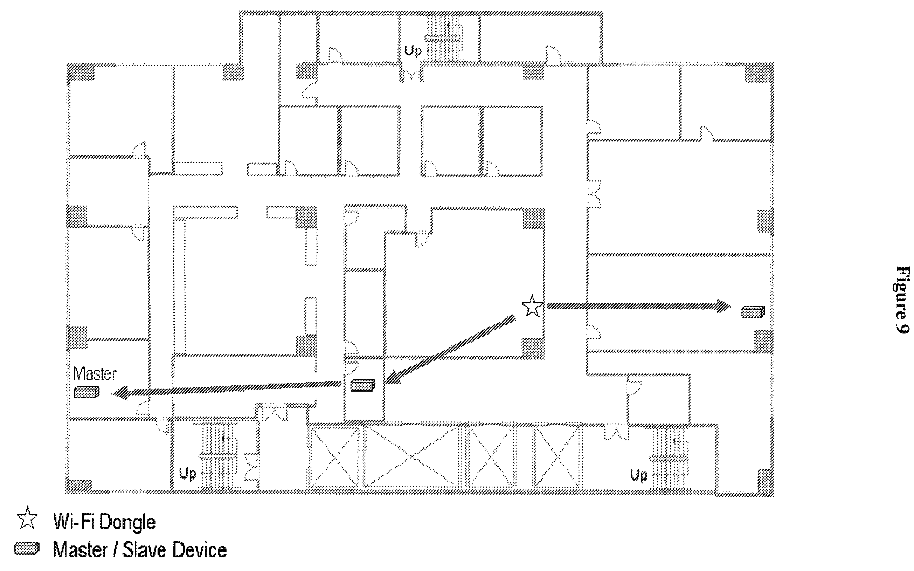

**Figure 9** shows one experimental setup of the present System.
**Figure 10** shows the energy measurement result of a hot and cold distilled water dispenser.
**Figure 11** shows the energy measurement results of three desktop computers and one notebook computer.
**Figure 12** shows the energy measurement results of a water dispenser in a pantry and a desktop computer in an office room. They are both connected to the System under control and monitoring, but are separated far apart and do not share the same Master/Slave device.

### DETAILED DESCRIPTION OF THE INVENTION

The present invention, the Energy Management System is a network system for household, offices or institutions, comprising a Dongle together with a plurality of Power Measurement Devices.

### Definitions and Abbreviations

AC - alternating current power delivered from the electricity utilities to the household.
Dongle - is a proprietary hardware. In one embodiment, it includes three communication modules, namely Wi-Fi, Z-Wave and USB. There is a micro-controller with proprietary software to connect these modules and to relay signals among each other.
Master Appliances - appliances for which their power consumption will be monitored, and one or more peripheral appliances will be switched on or off depending on the power consumption of the master appliances.
Master Device - functions same as a Slave Device. In one embodiment, it includes a detachable Dongle and an additional docking and charging space for the Dongle.
Peripheral Appliances -appliances for which their power will be switched on or off depending on power consumption of the master appliances.
RF - a frequency or band of frequencies that can be used for radio communications and broadcasting.
Slave Devices - a proprietary hardware functioning like a power strip. In one embodiment, it includes a Z-Wave module, an energy measurement system, and a micro-controller with proprietary software. It can communicate wirelessly with the Dongle to exchange energy measurement data and other control data.
Smart phone - may be thought of as handheld computers integrated within a mobile telephone; a smart phone usually allows the user to install and run more advanced applications.
SSID - service set identifier (SSID) is a name that identifies a particular 802.11 wireless LAN (also known as Wi-Fi).
Tablet PC - is a notebook or slate-shaped mobile computer; refers to computer-like devices operated primarily by a touch screen.
USB - is an industry standard developed in the mid-1990s that defines the cables, connectors and communications protocols used in a bus for connection, communication and power supply between computers and electronic devices.
Wi-Fi - is a mechanism for wirelessly connecting electronic devices. A device enabled with Wi-Fi, such as a personal computer, video game console, smart phone, or digital audio player, can connect to the Internet via a wireless network access point.
Z-Wave - is a standard in wireless remote control using low power radio waves.

In one embodiment, the power measurement device as shown in Figure 2 has a similar construction as an ordinary power strip. It has an AC plug to acquire electrical power, and can be designed to have a plurality of AC sockets to deliver electricity for any appliances plugged on it. Each of the AC sockets is associated with an electronic circuitry to measure the electrical power and an electronic switch to control the power on or off. Power measurement data will be stored in memory, for a period of time until the memory is full. In addition, there is a wireless communication module in the power measurement device for the control and data signal exchange with a Master Device or a Dongle. In one embodiment, Z-Wave wireless communication module is used. Other wireless protocols generally known in the art, such as ZigBee can also be used. When it is wirelessly connected to a Master Device or a Dongle, the data can be transferred to computers, portable devices or Internet servers for analysis. However, a power measurement device (the Slave Device) can operate, measure, and store data alone, without the Master Device.

In one embodiment, the Master Device as shown in Figure 3 not only has the same functions as the Slave Device, but also includes a detachable Dongle, a docking space for the Dongle, and a battery charging circuitry for the Dongle. In one embodiment, the Master device can operate as a single separate device without any slave devices.

In one embodiment, the Dongle as shown in Figure 4 includes a Z-Wave wireless communication module as well as an industrial standard Wi-Fi module which translates the power measurement data and remote control instructions to and from the Master or Slave Devices to be accepted by computers, smart phones and tablet PC which support the Wi-Fi feature. There is a built-in rechargeable battery to power the Dongle. Besides, there is a standard USB connector to allow direct communication with computers through the USB bus. The battery charging is also supported through the USB bus power from this USB connection.

In one embodiment, the Dongle supports two operating modes offered by the Wi-Fi standard, namely ad-hoc and infrastructure modes. The ad-hoc is a peer-to-peer mode. It operates solely and directly between the Master Device and the computers, smart phones, or tablet PC. On the contrary, the infrastructure mode involves a third party wireless router as a central hub to route data traffic among the Master Device, computers, smart phones, tablet PC, as well as the Internet which allows remote access away from home. Any wireless system, including Wi-Fi, has a coverage problem or blind spots caused by long distance, walls attenuation, or interference. To solve this shortcoming, the Dongle (with the Wi-Fi module) can be detached from the Master Device. The battery powered Dongle can then be brought close to the blind spots, and switched to ad-hoc (peer-to-peer) mode so as to directly communicate with the computers, smart phones, or tablet PC to solve the coverage problem. Moreover, if there is no existing home or office Wi-Fi network, the present System is capable of using the ad-hoc mode to create a new Wi-Fi network. In addition, prior to using the infrastructure mode, the ad-hoc mode is used to pass the Wi-Fi authentication information, such as SSID and password, to the Dongle.

After Wi-Fi authentication, the Wi-Fi module on the Dongle can be linked up with a software application on computers, smart phones or tablet PC. When the Master or Slave Device is plugged into the AC mains, it will notify the Dongle wirelessly and the Dongle will update the software application via Wi-Fi. The location of this Master or Slave Device (such as kitchen or bedroom) will be prompted by the software application.

In one embodiment, there is a plug and unplug detection mechanism, by either mechanical or optical mean, implemented to each AC socket of the Master or Slave Device to check the presence of an AC plug to the socket. When an appliance has been plugged into the Master or Slave Device, a similar wireless process will notify the software application to prompt for a name (such as TV or computer) for this newly included appliance.

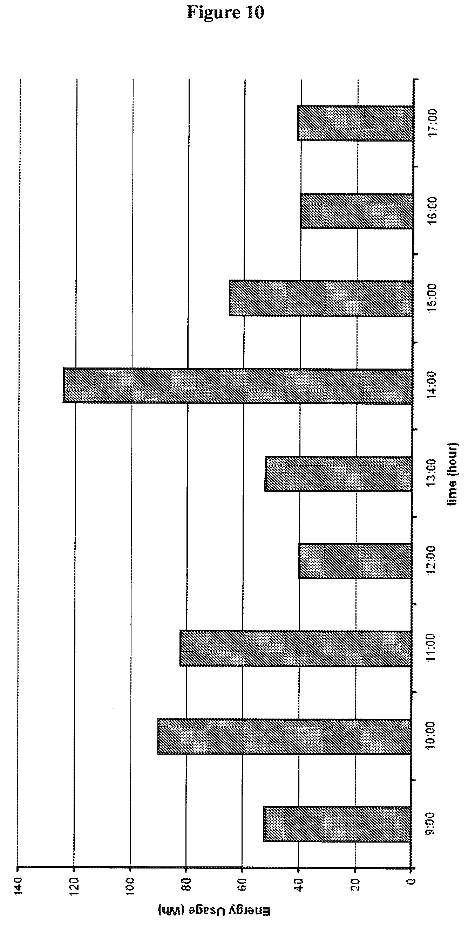

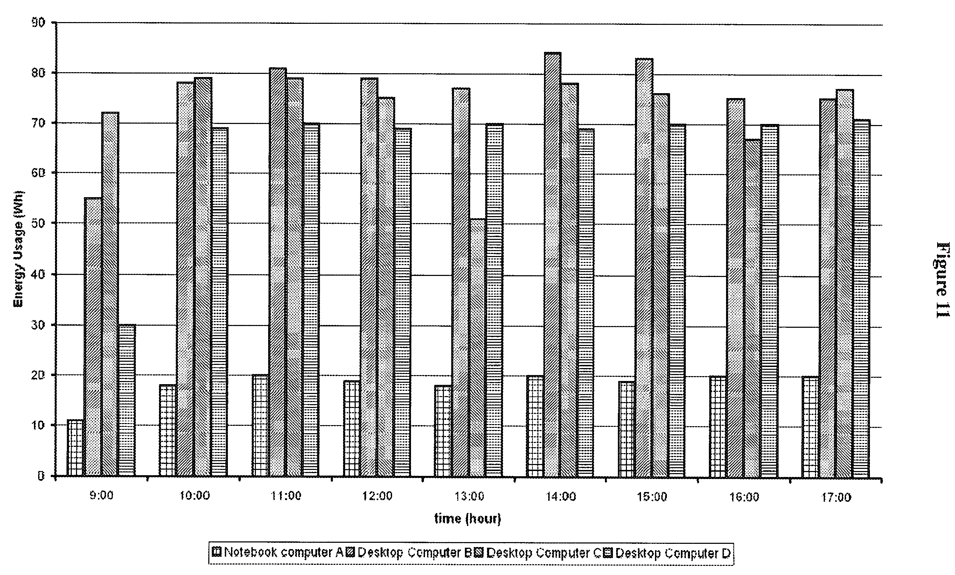

In one embodiment, the software application provides a user interface to display the power measurement and on/off status for each appliance in the system. Each appliance can be switched on or off through the software application remotely. The instantaneous power and the power consumption history in the past can also be retrieved to display through the software application. Analysis can also be made to provide graphical power usage per minute, per hour, per day, per week, per month, or per year to review the usage pattern of an individual appliance *(see e.g.* Figures 10-11). In another embodiment, power usage per location, such as living room, kitchen, or bedroom can be made. Power usage per category, such as computer & peripherals, TV & Hi-Fi, can also be consolidated. With the electricity usage information collected from most of the appliances, a summary report of usage pattern, temporal distribution, break-down by areas (e.g. rooms) and categories can be generated for review. Corresponding target saving plans can be optimized to any individual area, category or appliance. Electricity consumption can thus be reduced accordingly.

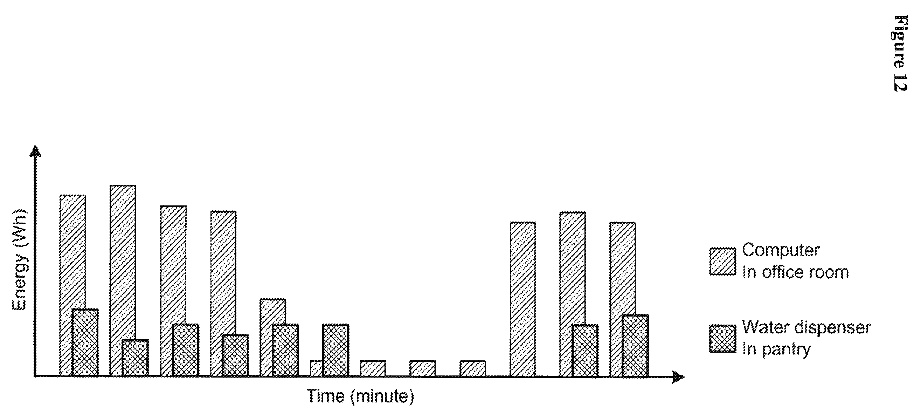

As each of the appliance has its unique identification name, a plurality of appliances can be grouped as master, for which their power will be monitored. Another plurality of appliances can be grouped as peripheral, for which their power will be switched on or off automatically depending on the power measured from the master group. The appliances, no matter the master or the peripheral groups, can be plugged in the Master Device, or any other Slave Devices separated anywhere at home or office. For example, a configuration can be set to have a hot & cold distilled water dispenser (in pantry) automatically switched off when all computers in an office room are consuming standby power only (*see e*.*g*. Figure 12). This is to provide minimal effort and less intervention required by the users to maintain effective and efficient energy saving.

When any of the included appliance is unplugged, the unplug detection mechanism will be triggered to notify the software application. Then the user will be prompted to confirm if this is intended to do so. This is to avoid improper plug insertion and wrong plug disconnection.

In one embodiment, the present invention provides an Energy Management system capable of determining one or a plurality of primary or master electrical appliances being in standby state, and then automatically switches off a plurality of user defined peripheral appliances across different Slave Devices located in different locations. In reverse, when the primary appliance resumes in operation, those peripheral appliances are switched on automatically.

In one embodiment, there is provided an energy management system comprising (a) one or more power measurement device, each of which comprises a communication module, a micro-controller, and one or more AC sockets, each of said socket is connected to a power measurement module; (b) one or more Dongle for wireless communication; and (c) a plurality of master and peripheral appliances plugged into said AC sockets, wherein energy consumption of said appliances are measured by the power measurement device and communicated to a computer or mobile device (e.g. a smart phone or a tablet PC etc) via the Dongle, wherein depending on the power consumption of the master appliances, the peripheral appliances could be switched on or off remotely via software on said computer or mobile device. In one embodiment, the software provides a user interface to manage energy measurement data and control the operation of the master and peripheral appliances.

In one embodiment, the AC sockets of the power measurement device further comprise a plug detection feature so that a user would be notified when an appliance is plugged into or unplugged from said sockets.

In one embodiment, the Dongle is not attached to a power measurement device. In another embodiment, the Dongle is reversibly attached to a power measurement device which further comprises a docking space and a battery charging circuitry for said Dongle.

In one embodiment, the Dongle communicates wirelessly with a computer or mobile device using Wi-Fi. For example, the Dongle is capable of operating under Wi-Fi in both infrastructure and ad-hoc modes. In another embodiment, the Dongle communicates wirelessly with the power measurement devices using Z-Wave or ZigBee wireless communication.

In one embodiment,, the present energy management system comprises one or more Master Devices (already with Wi-Fi Dongles), and no Slave Devices. Alternatively, the present energy management system comprises one or more Master Devices (already with WiFi Dongles) and one or more Slave Devices. In another embodiment, a Slave device can communicate directly with the Dongle without any Master Device, i.e. the system comprises one or more Slave Devices and one or more Wi-Fi Dongles, but no Master Devices.

In one embodiment, the peripheral appliances are switched off automatically when the master appliances are in standby state. In another embodiment, the peripheral appliances are switched on automatically when the master appliances resume operation.

The present invention also provides a power measurement device comprising a communication module, a micro-controller, and one or more AC sockets, each of said socket is connected to a power measurement module.

In one embodiment, the above power measurement device further comprises a detachable communication module, a docking space for said module, and a battery charging circuitry for said module. In one embodiment, said detachable communication module is capable of operating under Wi-Fi in both infrastructure and ad-hoc modes. In another embodiment, said detachable communication module communicates wirelessly with the power measurement device using Z-Wave or ZigBee wireless communication.

In another embodiment, the AC sockets of the power measurement device further comprise a plug detection feature so that a user could be notified when an appliance is plugged into or unplugged from said sockets.

The present invention also provides a method of managing power consumption of a plurality of appliances, comprising the step of plugging said appliances into the energy management system described above.

Although a detailed description of one preferred embodiment of the present disclosure has been expressed using specific terms and devices, but those skilled in the art will readily appreciate that the specific examples are for illustrative purposes only and should not limit the scope of the invention which is defined by the claims which follow thereafter.

It is to be noted that the transitional term "comprising", which is synonymous with "including", "containing" or "characterized by", is inclusive or open-ended and does not exclude additional, un-recited elements or method steps.

## Claims

1. An energy management system comprising
(a) one or more power measurement device each of which comprises (1) a plug, (2) one or more power measurement module, (3) a memory module, (4) one or more AC sockets each of which is coupled with an AC switch, (5) one or more communication modules and (6) a microcontroller, wherein said microcontroller is adapted to control the AC switches;
(b) a Master Device comprising a plug, a docking space and one or more detachable Dongle wherein said Dongle comprises a microcontroller, one or more communication modules, charging circuitry and battery; and
(c) one or more computer or mobile device, wherein said computers or mobile devices comprise a software for analyzing energy consumption measurement and providing control instructions for controlling the energy consumption of the AC sockets,
wherein energy consumption from the AC sockets are measured by the one or more power measurement device and communicated to the computer or mobile devices via the Dongle of the Master Device, wherein control instructions from the computers or mobile devices are communicated to the microcontroller in the one or more power measurement device via the Dongle of the Master Device.

2. The energy management system of claim 1, wherein the Master Device and the power measurement devices are combined in a single device.

3. The energy management system of any one of claims 1 to 2, wherein said detachable Dongle is battery powered when detached from the Master device.

4. The energy management system of any one of claims 1 to 3, wherein the Dongle of the Master device communicates wirelessly with said computer or mobile device using Wi-Fi.

5. The energy management system of claim 4, wherein the Dongle of the Master device is capable of operating under Wi-Fi in both infrastructure and ad-hoc modes.

6. The energy management system of claim 5, wherein under infrastructure mode, the computer or mobile device can communicate with the Dongle of the Master device from anywhere in the world having internet connection.

7. The energy management system of any one of claims 1 to 6, wherein said Master device communicates wirelessly with the power measurement device using Z-Wave or ZigBee wireless communication.

8. The energy management system of any one of claims 1 to 7, wherein the computer or mobile device is a smart phone, a tablet PC, a slate-shaped mobile computer or a notebook computer.

9. The energy management system of any one of claims 1 to 8, wherein the memory module can store the energy consumption measurement data from each AC socket in the system.

10. The energy management system of any one of claims 1 to 9, wherein each of said AC sockets further comprises a mechanical or optical plug detection mean so that a user would be notified through said software when an appliance is plugged into or unplugged from said socket.

11. A method for energy management, comprising the steps:
using the energy management system of any of claim 1-10;
wherein said computers or mobile devices comprise a software for analyzing energy consumption measurement and providing control instructions for controlling the energy consumption of the AC sockets;
wherein the energy consumption from the AC sockets are measured by the one or more power measurement device and communicated to the computer or mobile devices via the Dongle of the Master Device; and
wherein control instructions from the computers or mobile devices are communicated to the microcontroller in the one or more power measurement device via the Dongle of the Master Device.

## Patentansprüche

1. Energiemanagementsystem, umfassend,
(a) eine oder mehrere Strommessvorrichtungen, von denen jede einen Stecker (1) umfasst, (2) eine oder mehrere Strommessmodule, (3) ein Speichermodul, (4) ein oder mehrere AC-Buchsen, von denen jede mit einem AC-Schalter gekoppelt ist, (5) ein oder mehrere Kommunikationsmodule und (6) einen Mikrocontroller, wobei der Mikrocontroller ausgelegt ist, um die AC-Schalter zu steuern;
(b) eine Mastervorrichtung, umfassend einen Stecker, einen Docking-Raum und ein oder mehrere abnehmbare Dongles, wobei der Dongle einen Mikrocontroller umfasst, ein oder mehrere Kommunikationsmodule, Ladeelektronik und eine Batterie; und
(c) einen oder mehrere Computer oder mobile Vorrichtungen, wobei die Computer oder mobilen Vorrichtungen eine Software umfassen, um die Energieverbrauchsmessung zu analysieren und Steueranweisungen bereitzustellen, um den Energieverbrauch der AC-Buchsen zu steuern,
wobei der Energieverbrauch von den AC-Buchsen durch die eine oder die mehreren Strommessvorrichtungen gemessen und an den Computer oder die mobilen Vorrichtungen über den Dongle der Mastervorrichtung kommuniziert wird, wobei die Steueranweisungen von den Computern oder den mobilen Vorrichtungen an den Mikrocontroller in der einen oder den mehreren Strommessvorrichtungen über den Dongle der Mastervorrichtung übertragen werden.

2. Energiemanagementsystem nach Anspruch 1, wobei die Mastervorrichtung und die Strommessvorrichtungen zu einer einzigen Vorrichtung kombiniert sind.

3. Energiemanagementsystem nach einem der Ansprüche 1 bis 2, wobei der abnehmbare Dongle batteriebetrieben ist, wenn er von der Mastervorrichtung abgenommen ist.

4. Energiemanagementsystem nach einem der Ansprüche 1 bis 3, wobei der Dongle der Mastervorrichtung mit dem Computer oder der mobilen Vorrichtung unter Verwendung von Wi-Fi drahtlos kommuniziert.

5. Energiemanagementsystem nach Anspruch 4, wobei der Dongle der Mastervorrichtung dazu in der Lage ist, unter Wi-Fi sowohl im Infrastruktur- als auch im Ad-Hoc-Modus zu arbeiten.

6. Energiemanagementsystem nach Anspruch 5, wobei im Infrastruktur-Modus der Computer oder die mobile Vorrichtung mit dem Dongle der Mastervorrichtung von jedem Punkt der Welt mit Internet-Anschluss kommunizieren kann.

7. Energiemanagementsystem nach einem der Ansprüche 1 bis 6, wobei die Mastervorrichtung mit der Strommessvorrichtung unter Verwendung von Z-Wave oder ZigBee drahtloser Kommunikation drahtlos kommuniziert.

8. Energiemanagementsystem nach einem der Ansprüche 1 bis 7, wobei der Computer oder die mobile Vorrichtung ein Smartphone, ein Tabletcomputer, ein plattenförmiger mobiler Computer oder ein Notebook ist.

9. Energiemanagementsystem nach einem der Ansprüche 1 bis 8, wobei das Speichermodul die Energieverbrauchs-Messdaten von jeder AC-Buchse im System speichern kann.

10. Energiemanagementsystem nach einem der Ansprüche 1 bis 9, wobei jede der AC-Buchsen weiter ein mechanisches oder optisches Steckererkennungsmittel umfasst, so dass ein Benutzer durch die Software benachrichtigt wird, wenn ein Gerät in die Buchse eingesteckt oder davon abgezogen wird.

11. Verfahren zum Energiemanagement, umfassend die Folgenden Schritte:
Verwenden des Energiemanagementsystems nach einem der Ansprüche 1 - 10, wobei
die Computer oder mobilen Vorrichtungen eine Software umfassen, um die Energieverbrauchsmessung zu analysieren und Steueranweisungen bereitzustellen, um den Energieverbrauch der AC-Buchsen zu steuern;
wobei der Energieverbrauch von den AC-Buchsen durch die eine oder die mehreren Strommessvorrichtungen gemessen und an den Computer oder die mobilen Vorrichtungen über den Dongle der Mastervorrichtung kommuniziert wird; und
wobei die Steueranweisungen von den Computern oder den mobilen Vorrichtungen an den Mikrocontroller in der einen oder den mehreren Strommessvorrichtungen über den Dongle der Mastervorrichtung übertragen werden.

## Revendications

1. Système de gestion d'énergie comprenant
(a) un ou plusieurs dispositifs de mesure de puissance, chacun desquels comprend (1) une fiche (2), un ou plusieurs modules de mesure de puissance, (3) un module de mémoire, (4) une ou plusieurs prises AC, chacune desquelles est couplée à un commutateur AC, (5) un ou plusieurs modules de communication et (6) un microcontrôleur, dans lequel ledit microcontrôleur est adapté pour commander les commutateurs AC ;
(b) un dispositif maître comprenant une fiche, un espace d'accueil et un ou plusieurs dongles amovibles, dans lequel ledit dongle comprend un microcontrôleur, un ou plusieurs modules de communication, un circuit de charge et une batterie ; et
(c) un ou plusieurs ordinateurs ou dispositifs mobiles, dans lequel lesdits ordinateurs ou dispositifs mobiles comprennent un logiciel pour analyser une mesure de consommation d'énergie et fournir des instructions de commande pour commander la consommation d'énergie des prises AC,
dans lequel des consommations d'énergie à partir des prises AC sont mesurées par les un ou plusieurs dispositifs de mesure de puissance et communiquées à l'ordinateur ou aux dispositifs mobiles par l'intermédiaire du dongle du dispositif maître, dans lequel des instructions de commande provenant des ordinateurs ou dispositifs mobiles sont communiquées au microcontrôleur dans les un ou plusieurs dispositifs de mesure de puissance par l'intermédiaire du dongle du dispositif maître.

2. Système de gestion d'énergie selon la revendication 1, **caractérisé en ce que** le dispositif maître et les dispositifs de mesure de puissance sont combinés dans un unique dispositif.

3. Système de gestion d'énergie selon l'une quelconque des revendications 1 ou 2, **caractérisé en ce que** ledit dongle amovible est alimenté par batterie quand il est détaché du dispositif maître.

4. Système de gestion d'énergie selon l'une quelconque des revendications 1 à 3, **caractérisé en ce que** le dongle du dispositif maître communique sans fil avec ledit ordinateur ou dispositif mobile en utilisant une Wi-Fi.

5. Système de gestion d'énergie selon la revendication 4, **caractérisé en ce que** le dongle du dispositif maître est capable de fonctionner en Wi-Fi à la fois dans des modes infrastructure et ad-hoc.

6. Système de gestion d'énergie selon la revendication 5, **caractérisé en ce qu'**en mode infrastructure, l'ordinateur ou le dispositif mobile peut communiquer avec le dongle du dispositif maître de n'importe où dans le monde avec une connexion Internet.

7. Système de gestion d'énergie selon l'une quelconque des revendications 1 à 6, **caractérisé en ce que** ledit dispositif maître communique sans fil avec le dispositif de mesure de puissance en utilisant une communication sans fil Z-Wave ou ZigBee.

8. Système de gestion d'énergie selon l'une quelconque des revendications 1 à 7, **caractérisé en ce que** l'ordinateur ou le dispositif mobile est un téléphone intelligent, une tablette PC, un ordinateur mobile en forme d'ardoise ou un ordinateur bloc-notes.

9. Système de gestion d'énergie selon l'une quelconque des revendications 1 à 8, **caractérisé en ce que** le module de mémoire peut stocker les données de mesure de consommation d'énergie provenant de chaque prise AC dans le système.

10. Système de gestion d'énergie selon l'une quelconque des revendications 1 à 9, **caractérisé en ce que** chacune desdites prises AC comprend en outre un moyen de détection de fiche mécanique ou optique de manière qu'un utilisateur serait avisé par le biais dudit logiciel quand un appareil est branché à ou débranché de ladite prise.

11. Procédé de gestion d'énergie, comprenant les étapes suivantes :
l'utilisation du système de gestion d'énergie selon l'une quelconque des revendications 1 à 10 ;
dans lequel lesdits ordinateurs ou dispositifs mobiles comprennent un logiciel pour analyser une mesure de consommation d'énergie et fournir des instructions de commande pour commander la consommation d'énergie des prises AC ;
dans lequel des consommations d'énergie à partir des prises AC sont mesurées par les un ou plusieurs dispositifs de mesure de puissance et communiquées à l'ordinateur ou aux dispositifs mobiles par l'intermédiaire du dongle du dispositif maître ; et
dans lequel des instructions de commande provenant des ordinateurs ou dispositifs mobiles sont communiquées au microcontrôleur dans les un ou plusieurs dispositifs de mesure de puissance par l'intermédiaire du dongle du dispositif maître.
